# FASCICULE DE BREVET EUROPEEN

(11) **EP 2 655 742 B1**
(45) Date de publication et mention de la délivrance du brevet: **13.08.2014**
(21) Numéro de dépôt: 11815507.6
(22) Date de dépôt: 21.12.2011
(51) Int. Cl.: D21J 3/00, D21J 7/00, E04D 3/36, E04D 3/40, E04D 1/30, E04D 3/32

(54) **PROCEDE DE REALISATION D'UN ELEMENT DE COUVERTURE DE TOITURE EN FIBRES VEGETALES ET ELEMENT DE COUVERTURE DE TOITURE**
VERFAHREN ZUR HERSTELLUNG EINES DACHDECKUNGSELEMENTS AUS PFLANZENFASERN UND DACHDECKUNGSELEMENT
METHOD FOR MANUFACTURING A ROOF-COVERING ELEMENT MADE OF PLANT FIBRES, AND ROOF-COVERING ELEMENT

(30) Priorité: 22.12.2010 FR 1061086
(43) Date de publication de la demande: 30.10.2013
(73) Titulaire: Onduline, 92300 Levallois Perret (FR)
(72) Inventeur: THOMAS, Michel, B-5100 JAMBES (BE); KAMIL, Melih, 34335 Istanbul (TR); RUFFENACH, François, F-76000 Rouen (FR); FOUTEL, Martin, F-27300 Menneval (FR)
(74) Mandataire: Coralis Harle
(86) Numéro de dépôt international: PCT/FR2011/053135
(87) Numéro de publication internationale: WO 2012/085465

(56) Documents cités:
- US-A- 2 048 045

## Description

La présente invention concerne un procédé de réalisation d'un élément de couverture en fibres végétales moulées imprégné de bitume pour toiture de bâtiment. Les éléments de couverture concernés peuvent être un élément de faîtage du type latéral ou du type chapeau, un élément de raccordement à une paroi plane, dit solin, ou une costière, un élément de jonction de deux plans de toiture, dit arêtier, voire même une pièce de couverture. Elle a des applications dans le domaine de la construction et du bâtiment.

On connaît déjà des systèmes de couverture de bâtiment utilisant des éléments de couverture de la toiture à base de cellulose imprégnée de bitume, notamment en forme de plaque ondulée. Ces éléments classiquement réalisés sont obtenus dans un procédé continu dans lesquels seules des formes développables en cellulose peuvent être obtenus. Ces formes sont ensuite imprégnées de bitume. Un tel procédé est typiquement décrit dans la demande US 6 042 359.

On connaît par le document US 2 048 045 un procédé pour fabriquer des éléments fibreux coniques.

En outre, le faîte de la toiture est recouvert de faîtières adaptées afin de parfaire l'étanchéité à l'eau de ruissellement qui s'écoule sur la couverture lors de pluies ou fonte de neige tout en permettant une circulation de l'air.

Ces éléments de couverture sont soumis à des contraintes climatiques qui peuvent être sévères : soleil, vents, pluies, neige, gels... Ils doivent donc présenter des caractéristiques adaptées pour pouvoir y résister. De plus, ils doivent être simples à mettre en oeuvre, d'un coût acceptable, et avoir un certain aspect esthétique, voire être adaptés à leur environnement architectural.

Le but de la présente invention est de proposer un procédé de réalisation d'un élément de couverture de toiture en fibres végétales, pour toiture en pente, ledit élément étant imprégné à coeur de bitume.

Selon l'invention,
- lors d'une première étape on réalise, par moulage à chaud dans un moule et sous pression de pressage du moule, un élément en fibres végétales dans une cavité de moulage du moule à partir d'une composition aqueuse de fibres végétales pressée et chauffée dans ledit moule jusqu'à ce que ledit élément ait un taux de matière sèche d'au moins 60%,
- lors d'une deuxième étape, après sortie de moule de l'élément, on sèche ledit élément jusqu'à un taux de matière sèche d'au moins 98% dans ledit élément,
- lors d'une troisième étape, on imprègne à coeur ledit élément avec un bitume à chaud, et
lors de la première étape, on met en oeuvre, avant la mise sous pression de pressage du moule et le chauffage, une phase préalable de concentration de la matière sèche de ladite composition dans le moule par mise en dépression de la cavité de moulage pendant une durée telle que la partie sèche de la composition restant dans le moule à la fin de la phase préalable de concentration soit d'au moins 20%.

Il est donc proposé de mettre en oeuvre un procédé de moulage à chaud en presse de compositions de fibres végétales, plus particulièrement de cellulose, permettant la réalisation d'éléments de couverture pour toiture pouvant avoir des formes tant développables que non développables. Le procédé de moulage à chaud sous presse mis en oeuvre permet le moulage d'éléments à haute densité de cellulose. A la sortie du moule, l'élément réalisé, qui est de préférence à base de cellulose, a perdu la plus grande partie de son eau et peut alors être éventuellement recouvert d'un vernis coloré, formulé à base de résine et de pigments minéraux, qui est ensuite durci à chaud lors d'une opération de séchage complémentaire, l'élément étant ensuite et finalement imprégné à coeur de bitume à chaud, typiquement vers 180-190°C. Pour l'application du vernis pigmenté, l'élément doit avoir, en sortie de moule, un taux de matière sèche d'au moins 60%. Cette valeur de taux de matière sèche évite que l'élément en sortie de moule se déforme lors des opérations ultérieures d'application de vernis et de séchage complémentaire avant imprégnation de bitume. Ce taux de matière sèche correspond au rapport du poids de la matière sèche sur le poids total de l'objet ramené en pourcentage. Ainsi un taux de matière sèche de 60% pour un objet signifie que l'objet contient 40% d'eau. Pour l'imprégnation par le bitume, l'élément doit avoir un taux de matière sèche proche de 100% afin d'éviter que la présence d'eau dans l'élément ne vienne perturber le processus d'imprégnation.

Dans divers modes de mise en oeuvre de l'invention, les moyens suivants pouvant être utilisés seuls ou selon toutes les combinaisons techniquement possibles, sont employés :
- le remplissage du moule par la composition aqueuse de fibres végétales se déroule avant la mise sous pression de pressage du moule,
- le remplissage du moule par la composition aqueuse de fibres végétales se déroule sans chauffage du moule,
- la phase préalable de concentration s'effectue pendant le remplissage du moule par la composition aqueuse de fibres végétales,
- le remplissage du moule par la composition aqueuse de fibres végétales se poursuit pendant une partie de début de la phase préalable de concentration,
- la phase préalable de concentration de la matière sèche de la composition aqueuse de fibres végétales dans le moule est réalisée par aspiration de la partie essentiellement aqueuse de la composition,
- la phase préalable de concentration de la matière sèche de la composition aqueuse de fibres végétales dans le moule est réalisée avant la mise sous pression de pressage du moule,
- la phase préalable de concentration de la matière sèche de la composition aqueuse de fibres végétales dans le moule est réalisée avant le chauffage du moule,
- au moins une partie de l'étape de concentration de la matière sèche de la pulpe dans le moule se poursuit pendant au moins une partie de la durée de pressage, de préférence au début du moulage sous pression de pressage du moule,
- le chauffage du moule commence avec le début de la mise sous pression de pressage du moule,
- le chauffage du moule commence après le début de la mise sous pression de pressage du moule,
- le chauffage du moule commence avec la fin de la mise sous pression de pressage du moule,
- une phase de mise sous pression de pressage du moule est mise en oeuvre,
- au moins deux phases de mise sous pression de pressage du moule sont mises en oeuvre,
- une phase de chauffage du moule est mise en oeuvre,
- au moins deux phases de chauffage du moule sont mises en oeuvre,
- les étapes de concentration de la matière sèche, de mise sous pression et de chauffage sont réalisées dans un même moule,
- les étapes de concentration de la matière sèche, de mise sous pression et de chauffage sont réalisés successivement dans différents moules et contre moules,
- le moulage de la première étape comporte au moins une étape de thermoformation sous pression de pressage du moule,
- l'étape de thermoformation est effectuée à une température comprise entre 150°C et 320 °C et de préférence d'environ 270 °C
- l'étape de thermoformation est effectuée sous une pression de pressage du moule comprise entre 0,3 MPa et 0,5 MPa et de préférence d'environ 0,45 MPa,
- la première étape est réalisée par mise sous pression de pressage du moule avec extraction de la phase aqueuse par aspiration hors du moule puis chauffage des moules,
- la première étape est réalisée par mise sous pression de pressage du moule avec extraction de la phase aqueuse par aspiration hors du moule et chauffage des moules,
- la partie sèche de la composition restant dans le moule à la fin de la phase préalable de concentration de la première étape est comprise entre 20% et 35%,
- à la fin de la première étape, l'élément en sortie de moule a une densité comprise entre 0,4 et 0,7,
- à la fin de la première étape, l'élément en sortie de moule a une densité comprise entre 0,45 et 0,7,
- à la fin de la première étape, l'élément en sortie de moule a une densité comprise de préférence entre 0,5 et 0,65,
- à la fin de la première étape, l'élément en sortie de moule a une épaisseur comprise entre 2 et 5 mm,
- à la fin de la première étape, l'élément en sortie de moule a une épaisseur d'environ 2,6 mm +/- 0,4 mm,
- à la fin de la première étape, l'élément en sortie de moule a un grammage sec compris entre 800 g/m² et 1800 g/m²,
- à la fin de la première étape, l'élément en sortie de moule a un grammage sec compris entre 1000 g/m² et 1400 g/m²,
- de préférence, à la fin de la première étape, l'élément en sortie de moule a un grammage sec d'environ 1250 g/m²,
- en sortie de moule, l'élément a un taux de matière sèche compris entre 60% et 100%,
- en sortie de moule, l'élément a un taux de matière sèche compris entre 60% et 96%,
- en sortie de moule, l'élément a un taux de matière sèche d'au moins 80%,
- en sortie de moule, l'élément a un taux de matière sèche compris entre 80% et 96%,
- avantageusement, en sortie de moule, l'élément a un taux de matière sèche compris entre 80% et 90%,
- préférablement, en sortie de moule, l'élément a un taux de matière sèche compris entre 80% et 85%,
- en sortie de moule, l'élément a un taux de matière sèche d'environ 80%,
- en sortie de moule, l'élément a un taux de matière sèche d'environ 85%,
- l'élément ne subit pas de nouveau moulage sous presse lors des étapes suivant la première étape,
- lors de la deuxième étape, l'élément est recouvert d'un vernis pigmenté,
- lors de la deuxième étape, on recouvre l'élément de vernis pigmenté et on laisse durcir ledit vernis tout en séchant ledit élément,
- lors de la deuxième étape, on sèche ledit élément jusqu'à un taux de matière sèche de pratiquement 100% dans ledit élément,
- lors de la deuxième étape, le séchage de l'élément s'effectue à chaud, par chauffage,
- le vernis pigmenté est durci à chaud,
- le vernis pigmenté comporte une résine thermodurcissable,
- l'obtention du taux de matière sèche requis pour l'imprégnation de l'élément avec un bitume à chaud a lieu lors du chauffage de l'élément pour durcissement du vernis pigmenté,
- on soumet l'élément en cellulose sortant du moule encore chaud directement à la deuxième étape d'application de vernis pigmenté,
- on soumet l'élément en cellulose à la deuxième étape d'application de vernis pigmenté après avoir laissé refroidir ledit élément jusqu'à une température déterminée,
- à la deuxième étape d'application de vernis pigmenté l'élément est a une température égale ou inférieure à la température déterminée,
- le vernis pigmenté comporte au moins un pigment minéral,
- le pigment minéral est de préférence un oxyde métallique,
- le vernis pigmenté est appliqué de préférence par pulvérisation,
- le vernis est à base de résine thermodurcissable et d'au moins un pigment minéral,
- on recouvre de vernis pigmenté l'élément sur une seule face, de préférence la face supérieure qui sera visible (en totalité ou partie) à l'extérieur sur la toiture,
- le vernis pigmenté n'est appliqué que sur une face de l'élément de couverture,
- le vernis pigmenté n'est appliqué que sur la face supérieure de l'élément de couverture,
- le vernis pigmenté est appliqué sur les deux faces de l'élément de couverture,
- lors de la troisième étape, on imprègne l'élément avec un bitume à chaud lorsque l'élément a un taux de matière sèche de pratiquement 100%,
- l'élément de couverture obtenu a une forme non développable,
- l'élément de couverture obtenu a une forme développable,
- le moulage sous presse à chaud et sous pression de la presse de la première étape a lieu dans un moule d'une forme non développable,
- le moulage sous presse à chaud et sous pression de la presse de la première étape a lieu dans un moule d'une forme développable,
- la fibre végétale est choisie parmi les fibres de cellulose, lesdites fibres de cellulose pouvant être issues de toutes sortes de bois, et autres fibres dont les fibres de blé, les fibres de lin, les fibres de chanvre, et leurs associations,
- la composition aqueuse de fibres végétales est une composition à base de pulpe de cellulose,
- la face supérieure de l'élément de couverture a un aspect de surface lisse,
- la face supérieure de l'élément de couverture a un aspect de surface similaire à celui des éléments standard bitumés armés de fibres cellulosiques, la surface du moule coté face supérieure de l'élément étant configurée à cette fin,
- la face supérieure de l'élément de couverture est sensiblement lisse,
- on réalise un élément de couverture imprégné de bitume qui possède une densité comprise entre 0,9 et 1,3 (méthode du pycnomètre au mercure),
- l'élément de couverture imprégné de bitume possède de préférence une densité d'environ 1 (méthode du pycnomètre).

L'invention concerne également un élément de couverture en fibres végétales, recouvert d'un vernis pigmenté et imprégné à coeur de bitume, pour toiture en pente d'un bâtiment tel que l'élément imprégné de bitume est obtenu par le procédé de l'invention, que l'élément imprégné de bitume présente une épaisseur comprise entre 2 et 5 mm et que l'élément imprégné de bitume possède une densité comprise entre 0,9 et 1, 3.

Dans divers modes de mise en oeuvre de l'élément de couverture, les moyens suivants pouvant être utilisés seuls ou selon toutes les combinaisons techniquement possibles, sont employés :
- l'élément de couverture a une épaisseur de 2,6 mm +/- 0,4 mm,
- l'élément de couverture est de forme développable,
- l'élément de couverture est de forme non développable,
- l'élément de couverture est destiné à être cloué ou vissé pour fixation sur la toiture,
- l'élément de couverture est une pièce de couverture,
- l'élément de couverture est destiné à recouvrir un point singulier d'une toiture,
- l'élément de couverture est une partie latérale de faîtage, un chapeau de faîtage, un solin ou costière, un arêtier.

L'invention concerne aussi une partie latérale de faîtage d'une toiture en pente, le faîtage comportant deux parties latérales de part et d'autre du faîte de la toiture et un chapeau recouvrant ce dernier.

La partie latérale de faîtage est un élément de couverture de l'invention et ladite partie latérale de faîtage de forme non développable en V comporte d'un premier coté une première aile, dite aile de faîte, et d'un second coté une seconde aile, dite aile de pente, l'aile de faîte étant destinée à remonter le long d'un coté du faîte de la toiture et à recevoir en couverture le chapeau recouvrant le faîte, l'aile de pente étant destinée à descendre le long de la toiture et à se placer sur une/des pièces de couverture disposées sur la pente de ladite toiture, l'aile de pente comportant un motif ondulé complémentaire de celui des pièces de couverture qu'elle recouvre afin d'assurer avec lesdites pièces de couverture une étanchéité à l'écoulement de l'eau sur la pente de la toiture, et ladite partie latérale de faîtage est de géométrie symétrique par rapport au faîte afin de pouvoir être utilisée aussi bien d'un coté que de l'autre dudit faîte.

Dans des variantes qui peuvent être combinées entre elles :
- l'aile de pente comporte vers son bord inférieur et parallèlement à ce dernier deux lignes d'embossage parallèles entre elles et concaves vers le bas,
- l'aile de faîte comporte une ligne de pliage permettant de plier la partie supérieure de ladite aile de faite par rapport à sa partie inférieure rejoignant l'aile de pente.

L'invention concerne aussi un chapeau de faîtage d'une toiture en pente, le faîtage comportant deux parties latérales de part et d'autre du faîte de la toiture et ledit chapeau recouvrant ce dernier, chaque partie latérale comportant une aile de faîte et une aile de pente.

Le chapeau est un élément de couverture de l'invention et ledit chapeau a une partie centrale arrondie en forme générale de gouttière allongée à concavité vers le bas et comporte latéralement, de chaque coté de la partie centrale, des ailes latérales sensiblement planes et comportant chacune une ligne d'épaulement surélevée et parallèle au bord latéral correspondant du chapeau, ladite ligne d'épaulement étant destinée à venir en correspondance avec une ligne d'embossage d'une aile de pente de partie latérale de faîtage.

Dans des variantes qui peuvent être combinées entre elles :
- le chapeau présente une forme non développable,
- le chapeau comporte en outre latéralement, vers le bas, des formes ondulées complémentaires d'au moins une partie élevée des formes ondulées d'ailes de pente de parties latérales de faîtage,
- la partie centrale arrondie du chapeau comporte des motifs transversaux en relief résultant chacun d'une déformation surélevée destinés à imiter les raccords d'assemblage de faîtières classiques,
- le chapeau comporte en outre au moins une ligne de pliage dans la longueur de l'élément,
- la ligne de pliage est au sommet de la partie centrale du chapeau,
- les lignes de pliage sont le long des raccordements de la partie centrale aux deux ailes latérales,
- le chapeau ne comporte pas de ligne de pliage.

L'invention concerne également d'autres éléments de couverture de points singuliers d'un toit tels que solin ou costière et arêtier, le solin ou costière étant un élément de raccordement à une paroi plane verticale (mur, cheminée...) et l'arêtier étant un élément de jonction incliné de deux plans de toiture distinct du faîte proprement dit. Les éléments de couverture solin ou costière et arêtier s'apparentent aux parties latérales de faîte, l'arêtier présentant cependant une orientation des ondulations qui est inclinée par rapport à celle de l'aile de faîte. De plus, l'arêtier doit être recouvert d'un chapeau et le solin ou costière est raccordé à la paroi par un montage particulier.

Plus particulièrement, on considère un élément de raccordement d'une toiture en pente d'un bâtiment à une paroi verticale, dit solin ou costière, tel qu'il est un élément de couverture de l'invention et qu'il comporte une partie ondulée destinée à être clouée ou vissée sur la toiture et une partie plane qui est destinée à être fixé sur la paroi verticale pour en assurer l'étanchéité.

On considère également un élément de jonction entre deux plans de toiture, dit arêtier, tel qu'il est un élément de couverture de l'invention et qu'il comporte d'un coté une aile de pente destinée à être clouées ou vissées sur la toiture et de l'autre coté une aile destinée à venir le long de la jonction et à être recouverte par un chapeau.

Plus précisément, on considère un élément de raccordement d'une toiture en pente d'un bâtiment à une paroi verticale, dit solin ou costière, tel qu'il est un élément de couverture de l'invention, de forme non développable en V et qu'il comporte d'un premier coté une première aile destinée à venir contre la paroi et d'un second coté une seconde aile destinée à descendre le long de la toiture et à se placer sur une/des pièces de couverture disposées sur la pente de ladite toiture, la seconde aile comportant un motif ondulé complémentaire de celui des pièces de couverture qu'elle recouvre afin d'assurer avec lesdites pièces de couverture une étanchéité à l'écoulement de l'eau sur la pente de la toiture. Dans une modalité particulière, la première aile comporte une ligne de pliage permettant de plier la partie supérieure de ladite première aile par rapport à sa partie inférieure rejoignant la seconde aile.

De même, on considère également un élément de jonction d'une arête inclinée entre deux plans de toiture, dit arêtier, tel qu'il est un élément de couverture de l'invention, de forme non développable en V et qu'il comporte d'un premier coté une première aile destinée à venir le long de l'arête et d'un second coté une seconde aile destinée à descendre le long de la toiture et à se placer sur une/des pièces de couverture disposées sur la pente de ladite toiture, la seconde aile comportant un motif ondulé complémentaire de celui des pièces de couverture qu'elle recouvre afin d'assurer avec lesdites pièces de couverture une étanchéité à l'écoulement de l'eau sur la pente de la toiture.

Parmi les avantages des éléments de couverture de l'invention, on peut mentionner leurs formes géométriques non développables qui peuvent être obtenues par le moulage en presse utilisé ce qui permet notamment de réaliser des éléments adaptés aux points singuliers de la toiture qui ne peuvent l'être avec la technologie classique du procédé continu et d'améliorer l'aspect esthétique de la toiture. Les éléments de couverture obtenus répondent aux normes habituelles du domaine. Par exemple, le test de la déchirure au clou (EN 534) donne un résultat supérieur à 200 N. Un autre avantage du procédé de réalisation des éléments de couverture est qu'il n'est pas nécessaire de procéder à un nouveau moulage après la première étape, l'élément obtenu en sortie de moule est suffisamment solide pour pouvoir subir les opérations ultérieures sans risque de déformation préjudiciable pouvant nécessiter un moulage ultérieur pour redonner une forme correcte à l'élément.

La présente invention, sans qu'elle en soit pour autant limitée, va maintenant être exemplifiée avec la description qui suit de modes de réalisation et de mise en oeuvre en relation avec :
les Figures 1a, 1b, 1c et 1d qui sont des représentations d'une partie latérale de faîtage respectivement en vue de dessus, vue de coté/latéralement, vue selon une coupe passant par une partie plane de l'aile de pente, et vue selon une coupe passant par le sommet d'une ondulation de l'aile de pente,
les Figures 2a, 2b, 2c et 2d qui sont des représentations d'un chapeau de faîte respectivement en vue de dessus (seule une moitié du chapeau est représentée), vue de coté/latéralement, vue selon une coupe passant par la partie en gouttière du chapeau, parallèlement à son sommet et a peu de distance de ce dernier, et vue en perspective plongeante,
la Figure 3 qui est une vue des relations en cours de montage entre des parties latérales de faîtage et des chapeaux de faîte,
la Figure 4 qui est une vue d'une toiture comportant un faîte avec des parties latérales de faîtage mais sans chapeau et venant en recouvrement de parties hautes de pièces de couverture,
la Figure 5 est une vue détaillée de l'interface, dit solin, entre un mur et une toiture en pente, par exemple d'appentis, et
la Figure 6 qui est un exemple de diagramme opérationnel concernant le moulage sous pression à chaud en presse permettant d'obtenir des éléments de couverture d'une toiture.

Les éléments de couverture de l'invention comportent chacun au moins un motif ondulé, pour la partie latérale de faîtage ledit motif ondulé étant celui l'aile de pente complémentaire de celui des pièces de couverture qu'elle recouvre, pour le chapeau de faîtage ledit motif ondulé correspond au moins à sa forme générale en gouttière allongée et, éventuellement, au(x) motif(s) ondulé(s) complémentaire de ceux de la partie latérale de faîtage.

Si les procédés connus de réalisation en continu d'éléments de couverture permettent la réalisation de formes simples, notamment ondulations, par contre, ils ne permettent pas la réalisation de formes géométriques complexes et en particulier non développables.

Or, il est possible de réaliser des objets en cellulose moulée ayant des formes géométriques complexes par un procédé de moulage à chaud de cellulose dans une presse. Un procédé de moulage à chaud de la cellulose est décrit dans la demande US-6 706 151. Dans ce type de presse, la pulpe de cellulose est aspirée à travers le moule qui comporte intérieurement des orifices d'introduction de la pulpe et des orifices d'aspiration de la partie aqueuse de la pulpe, ce qui permet la concentration de la cellulose et également l'échappement de la vapeur d'eau produite par le chauffage du moule.

Cependant, les caractéristiques des objets classiquement réalisés par moulage à chaud de cellulose ne sont pas adaptées à une application en couverture de bâtiment et/ou pour pouvoir subir des opérations complémentaires. De plus, les conditions de mise ne oeuvre du procédé de moulage dépendent de nombreux paramètres qui peuvent interagir entre eux et conduire à des résultats défavorables et/ou des coûts de production trop élevés. En outre, pour la réalisation d'un élément de couverture, on enduit d'un vernis pigmenté l'élément produit par le moule et ce vernis doit sécher. On doit également imprégner de bitume à coeur et à chaud l'élément produit par le moule, élément qui doit avoir certaines propriétés pour pouvoir subir cette opération sans risque. Ces différentes opérations interagissent entre elles. L'obtention par moulage d'un élément de couverture ayant des caractéristiques particulières dans des conditions opérationnelles et économiques satisfaisantes est donc relativement complexe.

Les éléments de couverture en cellulose, recouverts d'un vernis pigmenté et imprégnés à coeur de bitume, pour toiture en pente d'un bâtiment, qui vont être plus particulièrement décrits à la suite sont, tout d'abord, des éléments pour le faîtage qui sont les parties latérales de faîtage 1 et le chapeau 8 correspondant, puis, à la suite, des solins, costières, arêtiers.

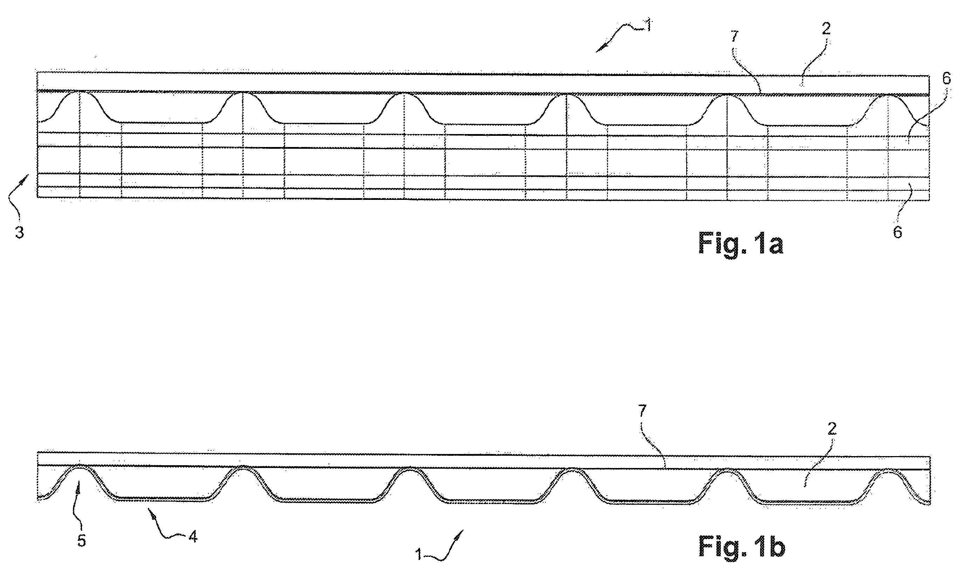

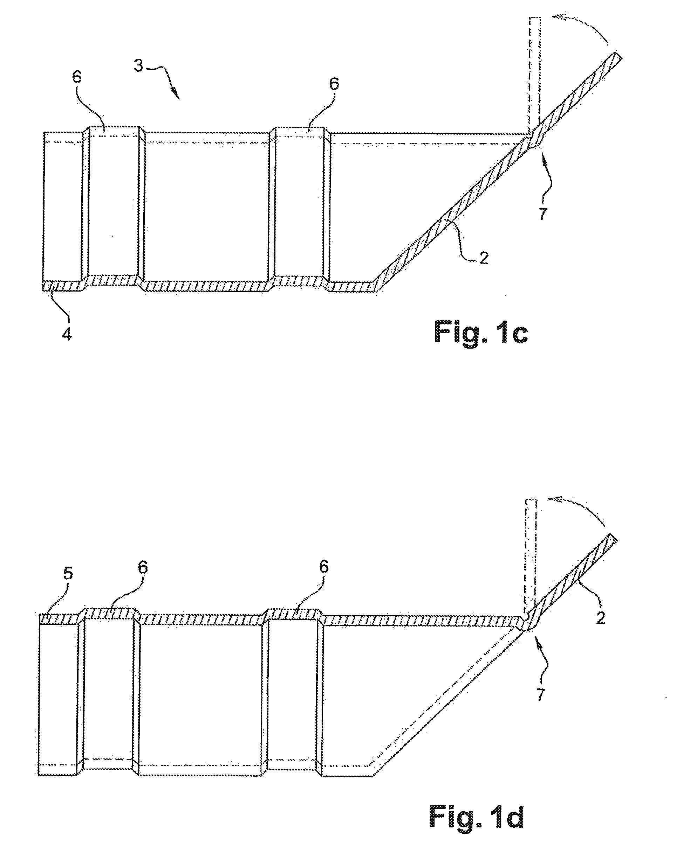

La partie latérale 1 de faîtage représentée sur les Figures 1a, 1b, 1c et 1d, est un élément globalement en V avec une aile de faîte 2 et une aile de pente 3. L'aile de faîte 2 est globalement plane et est destinée à remonter sur le coté de la charpente du faîte de la toiture. Une ligne de pliage 7 court le long de l'aile de faîte 2 et permet une certaine flexibilité de la partie supérieure de l'aile de faîte comme représenté Figures 1 c et 1d avec une possibilité de pliage de cette partie supérieure. Cette ligne de pliage facilite la mise en oeuvre de la partie latérale de faîtage sur tout type de charpente ou maçonnerie de ligne de faîte. Cette ligne de pliage est optionnelle et peut être omise dans des variantes de réalisation. A noter que dans une mise en oeuvre le long d'une façade ou d'un mur, pour construction du toit d'un auvent ou d'une véranda par exemple, cette possibilité de pliage de la partie supérieure de l'aile de faîte permet que cette dernière soit appliquée et fixée à plat contre la façade/mur. On verra par la suite que cette possibilité de pliage permet de simplifier la mise en oeuvre d'une telle partie latérale aussi à titre de solin ou costière. Si on a représenté le pliage vers le haut pour obtenir une partie supérieure de l'aile de faîte qui soit verticale, on comprend bien que le pliage vers le haut peut être plus ou moins prononcé ou même, que le pliage peut se faire vers le bas si nécessaire.

L'aile de pente 3 est destinée à être appliquée sur une pièce de couverture elle même disposée sur la charpente de la toiture, directement ou non (par exemple présence d'un pare condensation entre les éléments de couverture et la charpente). L'aile de pente 3 comporte des ondulations 5 et ces dernières se raccordent à l'aile de faîte plane, ce qui fait que la partie latérale de faîtage a une forme qui n'est pas développable. Dans l'exemple représenté, les ondulations 5 de l'aile de pente 3 de la partie latérale 1 de faîtage sont des parties surélevées arrondies se raccordant à des parties sensiblement planes 4. Les parties sensiblement planes 4 sont étendues entre les parties surélevées 5 (ondulations) et sont toutes dans un même plan général et elles se raccordent également à l'aile de faîte 2.

La partie latérale 1 de faîtage est un élément d'une pièce, continu, qui permet d'assurer l'étanchéité de la toiture dans la zone qu'elle recouvre. Par exemple, l'épaisseur moyenne de la partie latérale de faîtage est d'environ 2,6 mm +/- 0,4 mm, la largeur de base de l'ondulation 5 (partie surélevée de l'aile de pente) est d'environ 95 mm (sa base se raccordant aux parties planes 4 donc), la périodicité des ondulations est d'environ 190 mm, une partie plane 4 ayant donc une largeur entre deux ondulations d'environ 190 - 95 = 95 mm. La hauteur de chaque ondulation 5 de l'aile de pente est d'environ 38 mm. La partie latérale de faîtage 1 représentée a une longueur totale d'environ 1020 mm, une largeur totale d'environ 140 mm, une hauteur totale d'environ 62 mm. Dans une modalité de réalisation elle peut comporter six ondulations dont les plus latérales se terminent le long des deux bords d'extrémité de ladite partie latérale de faîtage. Dans une autre modalité de réalisation elle comporte cinq ondulations et les deux bords d'extrémité de ladite partie latérale de faîtage sont alors plats.

L'aile de faîte 2 est inclinée d'environ 45° par rapport à l'aile de pente 3. Dans d'autres modalités de réalisation, l'angle d'inclinaison entre l'aile de faîte et l'aile de pente peut être plus ou moins important. Deux lignes d'embossage 6, c'est-à-dire une paire de lignes d'embossage, parallèles à concavité vers le bas, sont réalisées parallèlement au bord inférieur libre de l'aile de pente. Chaque ligne d'embossage a une largeur d'environ 15 mm, une hauteur propre d'environ 2 mm, et la ligne d'embossage la plus basse, la plus proche du bord inférieur libre de l'aile de pente, est à environ 10 mm dudit bord.

On comprend que les valeurs données sont approximatives et indicatives et qu'elles peuvent être différentes selon les modèles spécifiques qui sont fabriqués.

Comme on l'a vu, la partie latérale de faîtage 1 présente donc une forme générale en V ouvert à 45°, les branches du V correspondant aux ailes de pente 3 et de faîte 2. L'aile de faîte remonte le long d'un des deux coté du faîte du toit. L'aile de pente, coté de la pente du toit, est conformée pour s'adapter/s'appliquer sur/contre les formes des pièces de couverture disposées sur la pente du toit, l'aile de pente s'appliquant et recouvrant les parties hautes de ces pièces de couverture. L'aile de pente a donc une forme complémentaire de celle des pièces de couverture et ces dernières sont contournées avec au moins une ondulation. Typiquement, ces pièces de couverture sont des plaques ondulées type ondulations sinusoïdales classiques ou trapézoïdales ou d'autres types d'ondulations comme par exemple des formes concaves et/ou convexes vers le haut imitant des assemblages d'articles couvrants standard.

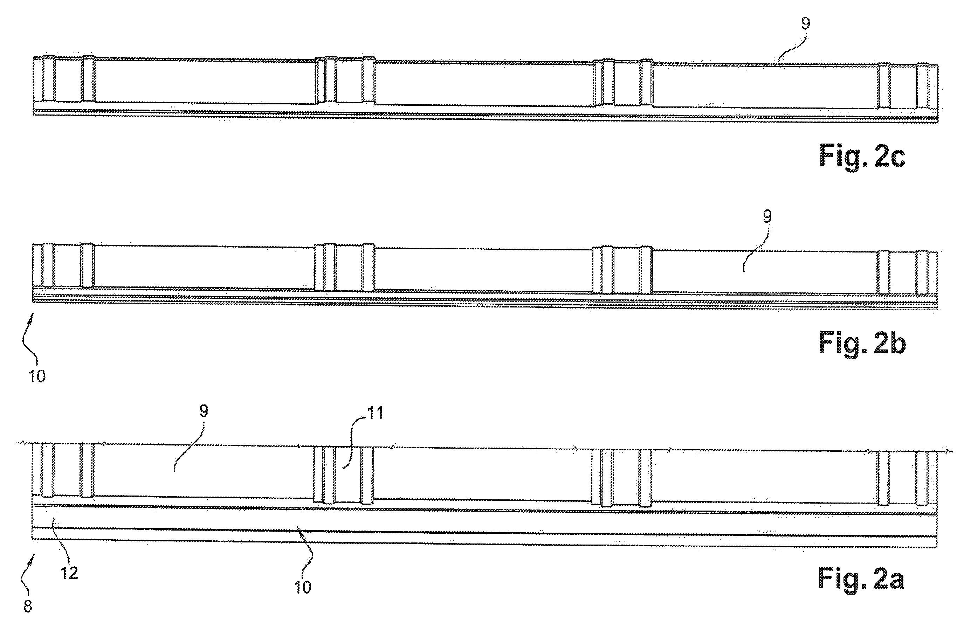

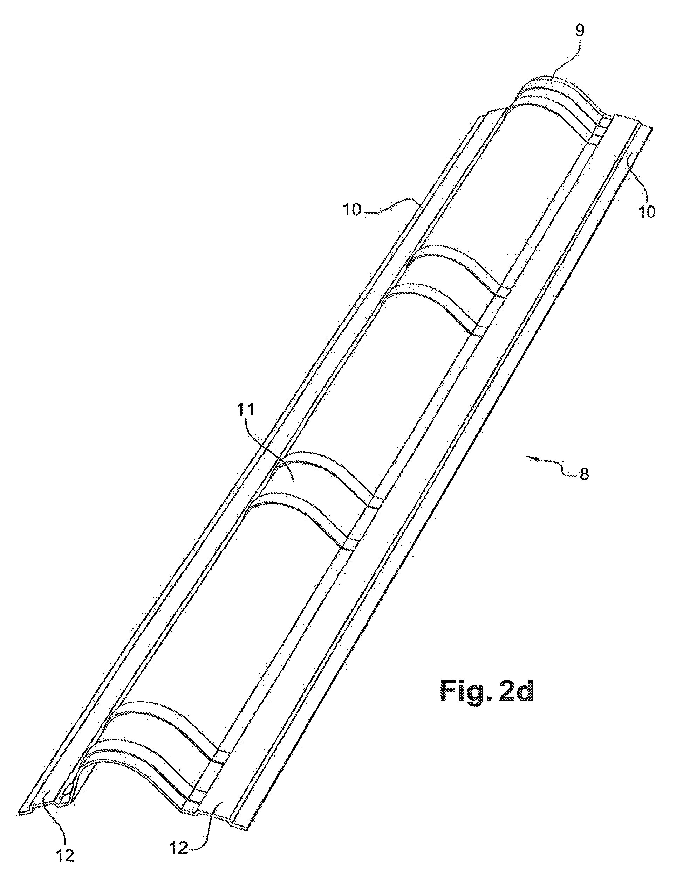

Le chapeau 8 représenté sur les Figures 2a, 2b, 2c et 2d a une forme générale de gouttière allongée inversée à fond arrondi 9 comportant latéralement, de chaque coté, deux ailes latérales. La partie centrale 9 et arrondie du chapeau 8 est donc concave vers le bas. Les deux ailes latérales 10 sont sensiblement planes et comportent chacune une ligne d'épaulement 12 débordant vers le haut et parallèle au bord latéral correspondant du chapeau. La partie centrale arrondie 9 du chapeau comporte des motifs transversaux 11 en relief résultant d'une déformation surélevée destinés à imiter les raccords d'assemblage de faîtières classiques. Le chapeau présente une certaine souplesse transversale et il est ainsi possible d'ouvrir ou refermer plus ou moins ledit chapeau en écartant ou rapprochant les deux ailes latérales. Si on le souhaite, on réalise une/des lignes de pliage du même type que celles des parties latérales de faîtage sur la longueur du chapeau 8, par exemple une au sommet de l'arrondi 9 et/ou une de chaque coté, à la limite entre la partie centrale arrondie 9 et l'aile latérale 10 correspondante. Cette ligne de pliage est optionnelle et peut être omise dans des variantes de réalisation.

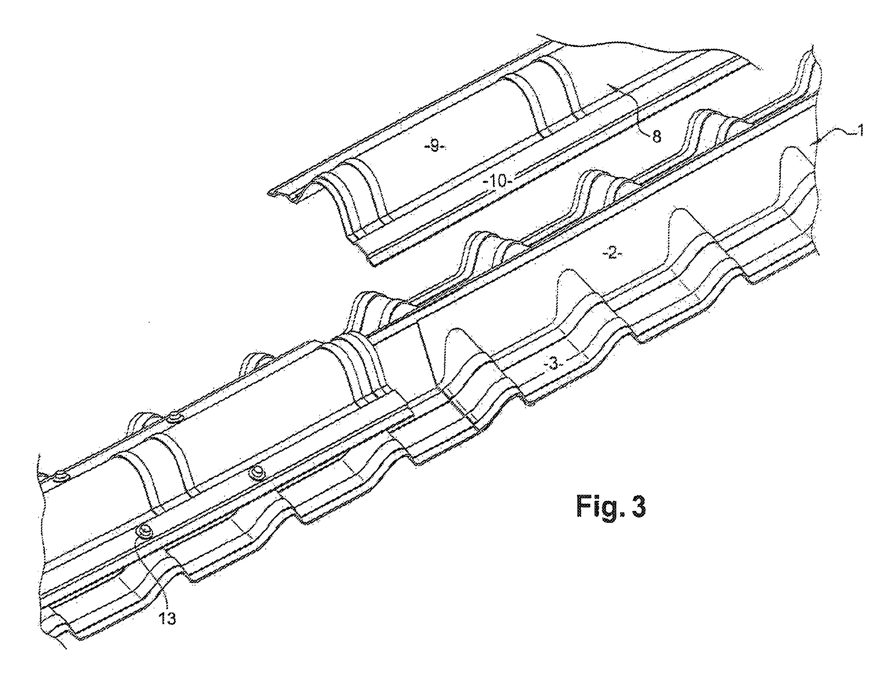

Sur la Figure 3, simplifiée car on n'a pas représenté les pièces de couverture sur lesquelles sont installée les parties latérales de faîtage, on peut voir une étape d'installation d'un faîtage, la partie gauche de la Figure 3 montrant le faîtage installé et fixé. Sur la partie droite de la Figure 3, un chapeau 8 est en cours de présentation pour recouvrir les ailes de faîtes 2 des parties latérales 1 de faîtage correspondantes. Le chapeau et les ailes de faîte sont fixées à une charpente non représentée par des vis ou pointes (clous) 13 disposées là où la partie latérale de faîtage est au contact du chapeau (au sommet des ondulations). Du fait de la souplesse relative du matériau mis en oeuvre dans l'invention, la chapeau peut être plus ou moins ouvert, c'est-à-dire avec un arrondi 9 plus ou moins prononcé et/ou des ailes latérales 10 plus ou moins inclinées, pour s'adapter à la largeur et/ou hauteur de la charpente de faîte et à l'écartement des parties latérales de faîtage. Ainsi, les éléments de couverture peuvent s'adapter à des toitures de pentes diverses et, par exemple des pentes comprises entre 5° (degrés) et 90° (degrés) pour des éléments standards réalisés pour les toitures généralement rencontrées qui sont à pente de 6° à 45° (degrés). On comprend cependant que l'invention permet de réaliser des éléments de toiture divers qui peuvent s'adapter à des contraintes particulières.

De préférence, la ligne d'épaulement 12 du chapeau vient en relation avec une des deux lignes d'embossage 6 de l'aile de pente de la partie latérale de faîtage.

Dans une variante du chapeau, ce dernier comporte en outre, latéralement et vers le bas, des ondulations latérales de forme complémentaire de celles des parties latérales 1 de faîtage sur lesquelles le chapeau 8 est placé afin que le chapeau soit au contact et épouse, dans ces parties, au moins la partie supérieure des ondulations 5 des parties latérales 1 de faîtage. Ces ondulations latérales, de chaque coté du chapeau, sont de préférence partielles en hauteur afin qu'il persiste des espaces entre l'extrémité inférieure et latérale du chapeau et les parties planes 4 de l'aile de pente 3 pour qu'une aération puisse se faire par le faîte comme on peut le voir sur la Figure 3.

Sur ces Figures 2a-2d et 3, le chapeau 8 représenté est de forme non développables mais dans des variantes on met en oeuvre un chapeau de forme développable.

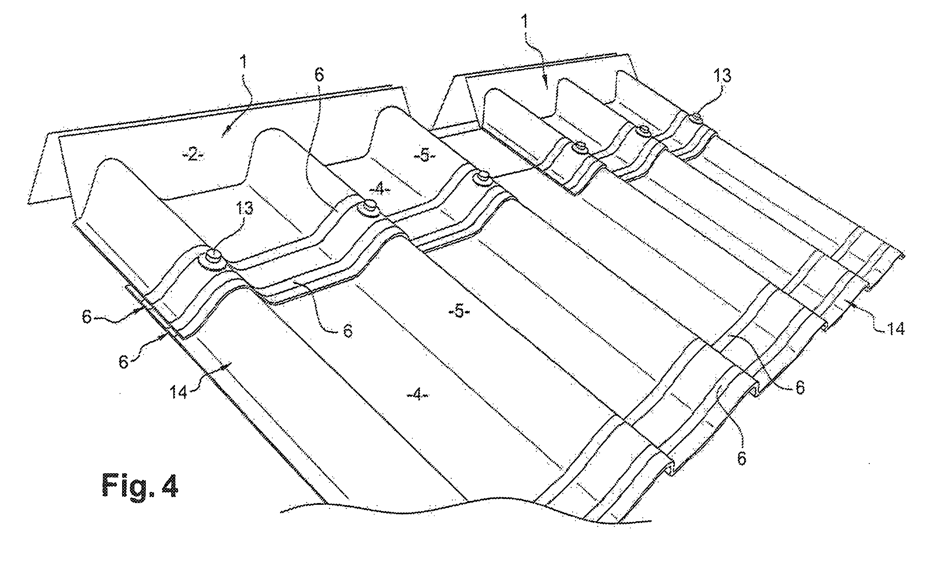

Sur la Figure 4, un montage expérimental réalisé à titre explicatif permet de montrer les relations entre des parties latérales de faîtage 1 et des pièces de couverture 14 sur un coté d'une toiture en pente. Les éléments de couverture qui sont utilisés ici sont simplifiés, notamment les parties latérales de faîtage n'ont pas de ligne de pliage. De plus, un espace a été laissé le long du faîte entre les parties latérales de faîtage afin de visualiser la partie supérieure des pièces de couverture 14 qui sont normalement recouvertes par l'extrémité latérale de l'aile de pente des parties latérales de faîtage. Les pièces de couverture 14 sont ici des plaques ondulées de forme développable de préférence en cellulose et imprégnées à coeur de bitume avec, de préférence, application de vernis pigmenté. Les pièces de couverture 14 sont à l'image de la forme de l'aile de pente de la partie latérale de faîtage avec des parties planes 4 entre des ondulations 5. Dans des variantes, les pièces de couverture sont dans le même matériau et obtenues de la même façon, par moulage à chaud en presse, que les parties latérales de faîtage de l'invention. De ce fait, les pièces de couverture peuvent alors être de forme non développable puisque obtenues par moulage.

Les pièces de couverture 14 ont le long de leurs extrémités latérales supérieures et inférieures des paires de lignes d'embossage 6 de forme complémentaire des deux lignes d'embossage 6 des ailes de pente des parties latérales de faîtage. Ces lignes d'embossage 6 des parties latérales de faîtage et des pièces de couverture s'emboîtent les unes dans les autres comme représenté Figure 4. On comprend que plus vers le bas, en descendant le long de la pente de la toiture, ce sont les lignes d'embossage de deux pièces de couverture successives et superposées à leurs extrémités qui s'emboîtent les unes dans les autres.

Un moyen de fixation 13 des éléments de couverture à la charpente de type pointe ou vis est placé aux sommets des ondulations 5 des parties latérales de faîtage et donc des pièces de couverture 14 qui sont dans cette zone recouvertes par les parties latérales de faîtage. On comprend que dans une réalisation réelle, lorsque le chapeau est mis en oeuvre sur les parties latérales de faîtage, le moyen de fixation va traverser de haut en bas, l'aile latérale 10 du chapeau, l'aile de pente de la partie latérale de faîtage et la pièces de couverture, tout cela au niveau du sommet d'une ondulation.

On va maintenant décrire les éléments de couverture à type de solin, ou costière. Ces éléments s'apparentent aux parties latérales de faîtage en ce sens qu'ils comportent deux parties principales inclinées entre elles, en V, et des motifs, notamment ondulés, adaptés pour recouvrir des pièces de couverture disposées en dessous et plus bas dans la pente de la toiture d'appentis ou d'un auvent ou d'un élément de construction traversant la toiture comme une cheminée. Dans ce dernier cas, on parle plus précisément d'une costière.

Un arêtier s'apparente également aux parties latérales de faîtage mais est destiné à s'adapter non plus au faîtage proprement dit mais à une arête inclinée d'un toit qui correspond à une cassure d'angle, inclinée, entre deux parties de pente différentes d'un toit. Ainsi, un arêtier est destiné à être disposé le long d'une arête inclinée entre deux plans de toiture. Un arêtier est mis en oeuvre avec un chapeau.

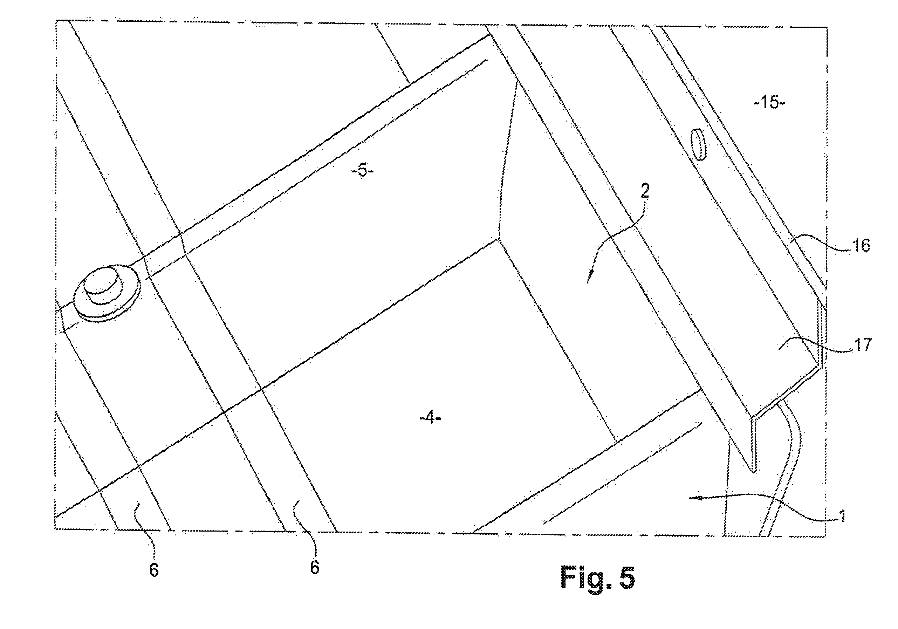

La Figure 5 permet de voir une variante de réalisation d'une toiture en pente du type appentis ou d'un auvent se raccordant à mi-hauteur d'un mur 15 vertical avec un élément de couverture qui constitue le solin. Le mur est ici sensiblement perpendiculaire à la ligne de pente. Pour cela, des éléments de couverture du type partie latérale 1 de faîtage sont fixés par leurs ailes de faîte 2 à plat sur le mur 15. On comprend l'utilité de la ligne de pliage 7 qui a été décrite sur les ailes de faîte 2 des parties latérales de faîtage 1 : il est donc possible d'utiliser facilement une partie latérale 1 de faîtage, initialement prévue pour mise en oeuvre sur un faîte de toiture, à titre de solin : la partie supérieure de l'aile de faîte 2 est pliée par rapport au reste et rendue verticale pour être appliquée contre le mur 15. Cette ligne de pliage est optionnelle et peut être omise dans des variantes de réalisation. D'ailleurs, sur la Figure 5, le solin porte la même référence numérique 1 qu'une partie latérale de faîtage. La forme et structure du reste du solin s'apparente à celles décrites précédemment pour les parties latérales de faîtage. Dans des variantes, le solin est un élément spécifique adapté à une mise en oeuvre le long d'un mur vertical, par exemple parce que l'aile de faîte comporte deux parties haute et basse angulairement décalées ou que l'aile de faîte fait un angle tel avec l'aile de pente que l'aile de faîte se retrouve verticale sur toute sa hauteur dans la mise en oeuvre le long du mur pour couvrir l'auvent ou appentis.

Dans cette application de solin et afin de garantir une étanchéité à l'eau de pluie, une rive avec un profilé métallique 17 est disposée et fixée juste au dessus et le long du bord supérieur de l'aile de faîte et un joint 16 en mastic est réalisé le long du profilé et du mur. On comprend que coté aile de pente, le reste de la couverture est réalisé par mise en oeuvre de pièces de couverture (non visibles sur cette Figure 5).

On comprend que la costière peut s'apparenter au solin dans certains cas (selon l'orientation par rapport à la pente) mais il s'applique, au lieu d'un mur, à un élément vertical traversant la toiture comme par exemple une cheminée.

A noter que les lignes d'embossage 6 que l'on trouve sur les parties latérales de faîtage dont solin, les chapeaux (ligne d'embossage correspondant à une seule ligne d'épaulement 12 en l'espèce) et les pièces de couverture ont au moins une double fonction : d'une part, de rigidifier les éléments de couverture qui en comportent et, d'autre part, de réduire la possibilité de remontée capillaire de l'eau à contre-pente entre les pièces de couverture adjacentes ou la partie latérale de faîtage et la pièce de couverture adjacente. Cette dernière fonction permet de réduire la largeur de la zone de superposition de bords entre deux pièces de couverture adjacentes par rapport à des pièces de couverture sans ces embossages pour une même prévention des remontées capillaires. Il est ainsi possible de couvrir une plus grande surface de toiture avec un même nombre de pièces de couverture. Ce raisonnement s'applique également pour les chapeaux et parties latérales de faîtage : la ligne d'épaulement 12 du chapeau venant en correspondance avec une des lignes d'embossage 6 de la partie latérale de faîtage. De même en ce qui concerne la superposition des lignes d'embossage des parties latérales et des pièces de couverture. En outre, les lignes d'embossage peuvent également servir de repères lors de la mise en place des éléments de couverture sur la toiture et, par exemple, pour l'emplacement des pointes de clouage (ou vis de vissage) desdits éléments de couverture sur la toiture et/ou servir à disposer/orienter/aligner correctement en lignes parallèles lesdits éléments de couverture.

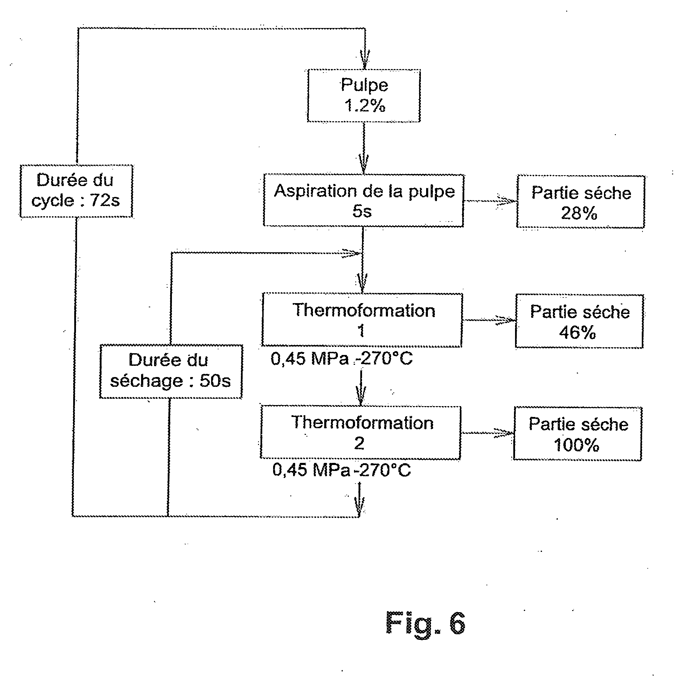

A titre d'exemple de fabrication d'un élément de couverture moulé à chaud sous pression du moule, on donne le diagramme de la Figure 6 qui concerne plus particulièrement une première étape de moulage sous pression à chaud d'une composition aqueuse de fibres végétales, de préférence de la pulpe de cellulose, qui permet d'obtenir une forme qui est relativement sèche, se tient et est prête à recevoir une composition de vernis thermodurcissable pigmenté et à être séchée à nouveau lors d'une deuxième étape puis, à être imprégnée à coeur de bitume lors d'une troisième étape.

La durée totale du cycle de moulage de la première étape est d'environ 72 s et comprend dans l'ordre : l'introduction dans le moule de la pulpe de cellulose dosée à environ 1,2% dans la composition liquide, l'aspiration de la partie liquide de la pulpe hors du moule pendant les 5 s d'une phase préalable de concentration en matière sèche qui fait que la partie sèche dans le moule passe à au moins 20%, dans cet exemple à environ 28%, puis deux phases de thermoformation sous pression de moulage d'environ 0,45 MPa et à chaud (270°C) sur une durée totale de séchage d'environ 50 s pour les deux phases de thermoformation dans le moule. Lors de ces deux phases successives de thermoformation, la partie sèche dans le moule passe à 46% puis finalement à pratiquement 100%. En pratique, on n'attend pas d'avoir les 100% et on se limite à 60%, voire 70%, de préférence 80%, au moins de matière sèche en sortie de moule car à partir de cette valeur, l'élément moulé se tient et ne risque plus de se déformer d'une manière significative lors des étapes ultérieures.

Ainsi, plus spécifiquement, on met en oeuvre des conditions opérationnelles telles qu'en sortie de l'opération de moulage sous pression à chaud, l'élément en cellulose moulée obtenu ait un contenu en matière sèche d'au moins 60%. En effet, même avec un reste d'humidité, il est possible de procéder à l'enduction, de préférence application par pulvérisation, de l'élément avec la composition de vernis pigmenté qui est ensuite durcie de préférence à chaud au cours d'un séchage ultérieur qui permet d'éliminer pratiquement tout le reste d'eau avant l'imprégnation à coeur de bitume chaud. En effet, l'imprégnation à chaud de bitume doit se faire préférentiellement sur un élément qui est pratiquement sec, c'est-à-dire avec un taux de matière sèche pratiquement à 100% pour éviter des phénomènes de moussage ou autres.

On comprend que ces valeurs sont indicatives et qu'elles peuvent être différentes notamment en fonction des éléments qui sont moulés. Par exemple on peut utiliser selon les cas une pulpe de cellulose dosée entre 1,2% et 1,9%, une durée d'aspiration des liquides hors du moule lors de la phase préalable de concentration comprise entre 2 s et 15 s, et une durée totale des deux thermoformations comprise entre 15 s et 50 s. La température de chauffage du moule peut être comprise entre 150 et 320°C pour une température préférentielle de chauffage du moule d'environ 270°C. La pression de moulage peut être comprise entre 0,15 et 0,5 MPa, de préférence entre 0,3 et 0,5 MPa. A la sortie de l'opération de moulage sous pression à chaud, l'élément en cellulose moulée, suivant les conditions opérationnelles (concentration en pulpe notamment), peut avoir une densité d'environ 0,53 et un poids surfacique ou grammage sec compris entre 1000 g/m² et 1400 g/m² et, de préférence, d'environ 1250 g/m². Le poids surfacique considéré dans ce document est celui correspondant à un élément ayant une surface non projetée unitaire. Pour donner un ordre d'idée, en général, pour la plupart des types d'éléments considérés, la surface non projetée ou surface développée est comprise entre 1,1 et 2 fois la surface projetée. L'élément en cellulose moulée obtenu après sortie de presse à typiquement une résistance à la rupture (contrainte de rupture en traction selon EN 12 311-1) d'environ 11 MPa et un module d'élasticité d'environ 1200 MPa.

On doit noter que pour obtenir un poids surfacique ou un grammage donné, on peut jouer sur le dosage de la cellulose de la pulpe et/ou la durée d'introduction de la pulpe dans le moule. En effet, l'aspiration de la partie aqueuse de la pulpe pendant la phase préalable de concentration fait que la cellulose de la pulpe a tendance à rester dans le moule et que la phase aqueuse a elle plutôt tendance à être aspirée hors du moule, il se produit donc un processus de concentration progressive de la cellulose dans le moule lors de l'aspiration. A noter que les conduits d'aspiration du moule servent également à la sortie de la vapeur d'eau lors du pressage à chaud de la pulpe lors de la thermoformation, ce qui évite une surpression pouvant être dangereuse à l'intérieur du moule au cas où la vapeur ne pourrait pas s'échapper.

Toujours à titre d'exemple, dans la deuxième étape de coloration, on utilise un vernis formulé à partir d'une résine et d'un oxyde métallique en quantité sèche d'environ 70 g/m². La résine est de préférence à prise à chaud. Dans la troisième étape d'imprégnation à coeur de bitume, on utilise un bitume de grade 70/100 à 190°C et une durée de traitement de 10 mn à 30 mn.

De plus, on peut modifier l'origine de la pulpe en fonction des besoins. En effet, la pulpe de cellulose peut être obtenue par exemple avec du papier recyclé, notamment journaux, et/ou de type KRAFT, et selon des proportions respectives différentes dans le cas de mélanges. Enfin, d'autres fibres végétales que la cellulose peuvent être mises en oeuvre. Ces autres fibres végétales peuvent aussi être combinées à de la cellulose.

Bien entendu la présente invention n'est pas limitée aux modes de réalisation particuliers qui viennent d'être décrits. Ainsi, on comprend bien que l'invention peut être déclinée selon de nombreuses autres possibilités sans pour autant sortir du cadre défini par la description et les revendications.

## Revendications

1. Procédé de réalisation d'un élément (1, 8) de couverture de toiture en fibres végétales, pour toiture en pente, ledit élément étant imprégné à coeur de bitume, **caractérisé en ce que**
- lors d'une première étape on réalise, par moulage à chaud dans un moule et sous pression de pressage du moule, un élément en fibres végétales dans une cavité de moulage du moule à partir d'une composition aqueuse de fibres végétales pressée et chauffée dans ledit moule jusqu'à ce que ledit élément ait un taux de matière sèche d'au moins 60%,
- lors d'une deuxième étape, après sortie de moule de l'élément, on sèche ledit élément jusqu'à un taux de matière sèche d'au moins 98% dans ledit élément, et
- lors d'une troisième étape, on imprègne à coeur ledit élément avec un bitume à chaud, et
**en ce que** lors de la première étape, on met en oeuvre, avant la mise sous pression de pressage du moule et le chauffage, une phase préalable de concentration de la matière sèche de ladite composition dans le moule par mise en dépression de la cavité de moulage pendant une durée telle que la partie sèche de la composition restant dans le moule à la fin de la phase préalable de concentration soit d'au moins 20%.

2. Procédé selon la revendication 1, **caractérisé en ce que** la partie sèche de la composition restant dans le moule à la fin de la phase préalable de concentration de la première étape est comprise entre 20% et 35%.

3. Procédé selon la revendication 1 ou 2, **caractérisé en ce que** à la fin de la première étape, l'élément en sortie de moule a une densité comprise entre 0,4 et 0,7 et présente une épaisseur comprise entre 2 et 5 mm.

4. Procédé selon la revendication 1, 2 ou 3, **caractérisé en ce que** à la fin de la première étape, l'élément en sortie de moule a un grammage sec compris entre 800 g/m² et 1800 g/m², de préférence d'environ 1250 g/m².

5. Procédé selon l'une quelconque des revendications précédentes, **caractérisé en ce que** lors de la deuxième étape, on sèche ledit élément jusqu'à un taux de matière sèche de pratiquement 100% dans ledit élément.

6. Procédé selon l'une quelconque des revendications précédentes, **caractérisé en ce que** lors de la deuxième étape, l'élément est recouvert d'un vernis pigmenté et que on laisse durcir ledit vernis tout en séchant ledit élément.

7. Elément (1, 8) de couverture en fibres végétales, recouvert d'un vernis pigmenté et imprégné à coeur de bitume, pour toiture en pente d'un bâtiment, **caractérisé en ce que** l'élément imprégné de bitume est obtenu par le procédé de la revendication 6, que l'élément imprégné de bitume présente une épaisseur comprise entre 2 et 5 mm et que l'élément imprégné de bitume possède une densité comprise entre 0,9 et 1,3.

8. Elément de couverture selon la revendication 7, **caractérisé en ce qu'**il est destiné à recouvrir un point singulier d'une toiture et qu'il est une partie latérale de faîtage, un chapeau de faîtage, un solin ou costière ou un arêtier.

9. Partie latérale de faîtage (1) d'une toiture en pente, le faîtage comportant deux parties latérales de part et d'autre du faîte de la toiture et un chapeau recouvrant ce dernier,
**caractérisée en ce qu'**elle est un élément de couverture selon la revendication 8 et que ladite partie latérale de faîtage de forme non développable en V comporte d'un premier coté une première aile, dite aile de faîte (2), et d'un second coté une seconde aile, dite aile de pente (3), l'aile de faîte étant destinée à remonter le long d'un coté du faîte de la toiture et à recevoir en couverture le chapeau recouvrant le faîte, l'aile de pente étant destinée à descendre le long de la toiture et à se placer sur une/des pièces de couverture disposées sur la pente de ladite toiture, l'aile de pente comportant un motif ondulé (5) complémentaire de celui des pièces de couverture qu'elle recouvre afin d'assurer avec lesdites pièces de couverture une étanchéité à l'écoulement de l'eau sur la pente de la toiture, et **en ce que** ladite partie latérale de faîtage est de géométrie symétrique par rapport au faîte afin de pouvoir être utilisée aussi bien d'un coté que de l'autre dudit faîte.

10. Chapeau (8) du faîtage d'une toiture en pente, le faîtage comportant deux parties latérales de part et d'autre du faîte de la toiture et ledit chapeau recouvrant ce dernier, chaque partie latérale comportant une aile de faîte et une aile de pente, **caractérisé en ce qu'**il est un élément de couverture selon la revendication 8 et que ledit chapeau a une partie centrale arrondie (9) en forme générale de gouttière allongée à concavité vers le bas et comporte latéralement, de chaque coté de la partie centrale (9), des ailes latérales (10) sensiblement planes et comportant chacune une ligne d'épaulement (12) surélevée et parallèle au bord latéral correspondant du chapeau, ladite ligne d'épaulement étant destinée à venir en correspondance avec une ligne d'embossage (6) d'une aile de pente de partie latérale (1) de faîtage.

11. Elément de raccordement d'une toiture en pente d'un bâtiment à une paroi verticale, dit solin ou costière,
**caractérisé en ce qu'**il est un élément de couverture selon la revendication 8, de forme non développable en V, et qu'il comporte d'un premier coté une première aile destinée à venir contre la paroi et d'un second coté une seconde aile destinée à descendre le long de la toiture et à se placer sur une/des pièces de couverture disposées sur la pente de ladite toiture, la seconde aile comportant un motif ondulé complémentaire de celui des pièces de couverture qu'elle recouvre afin d'assurer avec lesdites pièces de couverture une étanchéité à l'écoulement de l'eau sur la pente de la toiture.

## Patentansprüche

1. Verfahren zur Herstellung eines Dachdeckungselements (1, 8) aus Pflanzenfasern für ein Schrägdach, wobei das Element mit Bitumen durchtränkt ist, **dadurch gekennzeichnet, dass**:
- in einem ersten Schritt durch Heißformen in einer Form und unter Druck des Pressens der Form ein Element aus Pflanzenfasern in einem Formhohlraum der Form aus einer wässrigen Zusammensetzung von gepressten und erhitzten Pflanzenfasern in der Form erstellt wird, bis das Element einen Trockenmassengehalt von mindestens 60 % aufweist,
- in einem zweiten Schritt, nachdem das Element die Form verlassen hat, das Element auf einen Trockenmassengehalt von mindestens 98 % in dem Element getrocknet wird und
- in einem dritten Schritt das Element mit einem Heißbitumen durchtränkt wird und
dass während des ersten Schrittes vor der Druckbeaufschlagung des Pressens der Form und dem Erhitzen eine vorherige Phase des Konzentrierens der Trockenmasse der Zusammensetzung in der Form durch Erzeugung eines Unterdrucks des Formhohlraums für eine Zeit umgesetzt wird, so dass der Trockenteil der Zusammensetzung, der am Ende der vorherigen Phase des Konzentrierens in der Form bleibt, mindestens 20 % beträgt.

2. Verfahren nach Anspruch 1, **dadurch gekennzeichnet, dass** der Trockenteil der Zusammensetzung, der am Ende der vorherigen Phase des Konzentrierens des ersten Schrittes in der Form bleibt, zwischen 20 % und 35 % liegt.

3. Verfahren nach Anspruch 1 oder 2, **dadurch gekennzeichnet, dass** das Element am Ende des ersten Schrittes beim Verlassen der Form eine Dichte hat, die zwischen 0,4 und 0,7 liegt, und eine Dicke aufweist, die zwischen 2 und 5 mm liegt.

4. Verfahren nach Anspruch 1, 2 oder 3, **dadurch gekennzeichnet, dass** das Element am Ende des ersten Schrittes beim Verlassen der Form ein Trockengewicht zwischen 800 g/m² und 1800 g/m², vorzugsweise von etwa 1250 g/m² aufweist.

5. Verfahren nach einem der vorhergehenden Ansprüche, **dadurch gekennzeichnet, dass** das Element während des zweiten Schritts auf einen Trockenmassengehalt von praktisch 100 % in dem Element getrocknet wird.

6. Verfahren nach einem der vorhergehenden Ansprüche, **dadurch gekennzeichnet, dass** während des zweiten Schritts, das Element von einem Pigmentlack überzogen wird und dass der Lack während des Trocknens des Elements ausgehärtet gelassen wird.

7. Dachdeckungselement (1, 8) aus Pflanzenfasern, das von einem Pigmentlack überzogen und mit Bitumen durchtränkt ist, für Schrägdach eines Gebäudes,
**dadurch gekennzeichnet, dass** das mit Bitumen getränkte Element durch das Verfahren von Anspruch 6 erhalten wird, dass das mit Bitumen getränkte Element eine Dicke zwischen 2 und 5 mm aufweist und dass das mit Bitumen getränkte Element eine Dichte von zwischen 0,9 und 1,3 besitzt.

8. Dachdeckungselement nach Anspruch 7, **dadurch gekennzeichnet, dass** es dazu bestimmt ist, eine einzelne Stelle eines Daches zu bedecken und dass es ein Seitenteil eines Dachfirstes, eine Firstkappe, ein Anschlussstreifen oder ein Aufsatzkranz oder ein Dachgrat sein kann.

9. Seitenteil eines Dachfirstes (1) eines Schrägdachs, wobei der Dachfirst zwei Seitenteile auf jeder Seite des Dachfirstes und eine Kappe aufweist, die diesen bedeckt,
**dadurch gekennzeichnet, dass** es ein Dachdeckungselement nach Anspruch 8 ist und dass der Seitenteil des Dachfirstes in nicht abwickelbarer V-Form auf einer ersten Seite einen ersten Flügel, den sogenannten Firstflügel (2), und auf einer zweiten Seite einen zweiten Flügel, den sogenannten Neigungsflügel (3), aufweist , wobei der Firstflügel dazu bestimmt ist, entlang einer Seite des Dachfirstes hoch zu reichen und als Bedeckung die Kappe aufzunehmen, die den Dachfirst bedeckt, wobei der Neigungsflügel dazu bestimmt ist, entlang des Daches herunter zu reichen und auf einem Bedachungsteil/Bedochungsteilen aufzuliegen, die auf der Neigung des Daches angeordnet sind, wobei der Neigungsflügel ein Wellenmuster (5) aufweist, das zu jenem der Bedachungsteile komplementär ist, die er bedeckt, um mit den Bedachungsteilen eine Dichtigkeit gegenüber dem ablaufenden Wasser auf der Neigung des Daches zu gewährleisten, und dass das Seitenteil des Dachfirstes von symmetrischer Geometrie gegenüber dem Dachfirst ist, um sowohl auf einer Seite als auch auf der anderen Seite des Dachfirstes verwendet werden zu können.

10. Firstkappe (8) eines Schrägdachs, wobei der Dachfirst zwei Seitenteile auf jeder Seite des Dachfirstes und die Kappe aufweist, die diesen bedeckt, wobei jedes Seitenteil einen Firstflügel und einen Neigungsflügel aufweist,
**dadurch gekennzeichnet, dass** sie ein Dachdeckungselement nach Anspruch 8 ist und dass die Kappe einen abgerundeten mittleren Abschnitt (9) in der allgemeinen Form einer Dachrinne aufweist, der in Konkavität nach unten verlängert ist, und seitlich auf jeder Seite des mittleren Abschnitts (9) seitliche Flügel (10) aufweist, die im Wesentlichen eben sind und jeweils eine Schulterlinie (12) aufweisen, die erhöht und parallel zu der entsprechenden Seitenkante der Kappe ist, wobei die Schulterlinie ausgebildet ist, um in Übereinstimmung mit einer Prägelinie (6) eines Neigungsflügels des Seitenteils (1) des Dachfirstes zu kommen.

11. Dachdeckungselement eines Schrägdachs eines Gebäudes an einer vertikalen Wand, ein sogenannter Anschlussstreifen oder Aufsatzkranz,
**dadurch gekennzeichnet, dass** es ein Dachdeckungselement nach Anspruch 8 in nicht abwickelbarer V-Form ist und dass es auf einer ersten Seite einen ersten Flügel aufweist, der dazu bestimmt ist, gegen die Wand zu kommen, und auf einer zweiten Seite einen zweiten Flügel aufweist, der dazu bestimmt ist, entlang des Dachs herunter zu reichen und auf einem Bedachungsteil/Bedachungsteilen aufzuliegen, das/die auf der Neigung des Daches angeordnet ist/sind, wobei der zweite Flügel ein Wellenmuster aufweist, das zu den Bedachungsteilen komplementär ist, die er bedeckt, um mit den Bedachungsteilen eine Dichtigkeit gegenüber dem ablaufenden Wasser auf der Neigung des Daches zu gewährleisten.

## Claims

1. A method of making a roof-covering element (1, 8) out of plant fibers, for a sloping roof, said element being fully impregnated with bitumen, the method being **characterized by**:
- in a first step, making a plant fiber element by hot compression moulding in a mould cavity of a mould from an aqueous composition of plant fibers that is compressed and heated in said mould until said element has a dry matter content of at least 60%;
- in a second step, after extracting the element from the mould, drying said element to a dry matter content of at least 98% in said element; and
- in a third step, fully impregnating said element with a hot bitumen; and
during the first step, prior to pressurizing and heating the mould, implementing a prior stage of concentrating the dry matter of said composition in the mould by applying suction to the mould cavity for a duration such that the dry fraction of the composition remaining in the mould at the end of the prior concentration stage is at least 20%.

2. A method according to claim 1, **characterized in that** the dry fraction of the composition remaining in the mould at the end of the prior concentration stage of the first step lies in the range 20% to 35%.

3. A method according to claim 1 or claim 2, **characterized in that**, at the end of the first step, the element extracted from the mould has relative density laying in the range 0.4 to 0.7 and presents thickness laying in the range 2 mm to 5 mm.

4. A method according to claim 1, 2, or 3, **characterized in that**, at the end of the first step, the element extracted from the mould presents a dry weight per unit area laying in the range 800 g/m² to 1800 g/m², and preferably of about 1250 g/m².

5. A method according to any preceding claim, **characterized in that** during the second step, said element is dried to a dry matter content in said element of practically 100%.

6. A method according to any preceding claim, **characterized in that** during the second step, the element is covered in a pigmented varnish and said varnish is allowed to set while drying said element.

7. A plant fiber roof-covering element (1, 8) covered in a pigmented varnish and fully impregnated with bitumen, for a sloping roof of a building, **characterized in that** the bitumen-impregnated element is obtained by the method of claim 6, **in that** the bitumen-impregnated element presents thickness laying in the range 2 mm to 5 mm, and **in that** the bitumen-impregnated element possesses relative density laying in the range 0.9 to 1.3.

8. A roof-covering element according to claim 7, **characterized in that** it is designed to cover a singular point of a roof, and **in that** it is a ridge side portion, a ridge cap, a fillet, a curb, or a hip.

9. A ridge side portion (1) of a sloping roof, the ridge having two side portions on either side of the ridge and a cap covering it, the ridge side portion being **characterized in that** it is a roof-covering element according to claim 8 and **in that** said ridge side portion having a V-shape that cannot be developed includes a first flange on one side, referred to as a ridge flange (2), and a second flange on a second side, referred to as a slope flange (3), the ridge flange being designed to extend up along one side of the ridge of the roof and to be covered by the cap covering the ridge, the slope flange being designed to extend down along the roof and to be placed on one or more roof-covering parts placed on the slope of said roof, the slope flange including a corrugation (5) complementary to a corrugation of the roof-covering parts that it covers so as to co-operate with said roof-covering parts to provide leaktightness against water flowing on the slope of the roof, and **in that** said ridge side portion is of a shape that is symmetrical relative to the ridge so as to be capable of being used equally well on either side of said ridge.

10. A ridge cap (8) for a sloping roof, the ridge covering comprising two side portions on either side of the ridge of the roof and said cap covering the ridge, each side portion having a ridge flange and a slope flange, the cap being **characterized in that** it is a roof-covering element according to claim 8 and **in that** said cap has a central rounded portion (9) generally in the form of an elongate gutter with its concave side facing downwards and including laterally, on either side of the central portion (9), substantially plane side flanges (10), each including a raised shoulder line (12) extending parallel to the corresponding side edge of the cap, said shoulder line being designed to come into correspondence with an embossing line (6) of a slope flange of the ridge side portion (1).

11. An element for connecting a sloping roof of a building to a vertical wall, such an element being referred to as a fillet or a curb, the element being **characterized in that** it is a roof-covering element according to claim 8, having a V-shape that cannot be developed, **in that** it has a first flange on a first side for coming against the wall and a second flange on a second side for extending down along the roof and for placing on one or more roof-covering parts placed on the slope of said roof, the second flange including a corrugation complementary to a corrugation of roof-covering parts that it covers in order to co-operate with said roof-covering parts to provide leaktightness against water flowing on the slope of the roof.
